# NEUE EUROPÄISCHE PATENTSCHRIFT

(11) **EP 0 633 157 B2**
(45) Veröffentlichungstag und Bekanntmachung des Hinweises auf die Entscheidung über den Einspruch: **18.10.2000**
(45) Hinweis auf die Patenterteilung: 14.05.1997
(21) Anmeldenummer: 94109157.1
(22) Anmeldetag: 15.06.1994
(51) Int. Cl.: B60L 11/18, H01M 8/04

(54) **Verfahren und Vorrichtung zur dynamischen Leistungsregelung für ein Fahrzeug mit Brennstoffzelle**
Device and method for the dynamic power control of a vehicle with fuel cell
Dispositif et méthode pour la commande de la puissance d'une véhicule avec une pile à combustible

(30) Priorität: 08.07.1993 DE 4322765
(43) Veröffentlichungstag der Anmeldung: 11.01.1995
(73) Patentinhaber: DBB Fuel Cell Engines GmbH, 73230 Kirchheim/Teck-Nabern (DE)
(72) Erfinder: Lorenz, Helmut, D-72669 Unterensingen (DE); Noreikat, Karl-Ernst, D-73733 Esslingen (DE); Klaiber, Thomas, D-71384 Weinstadt (DE); Fleck, Wolfram, D-89155 Erbach (DE); Sonntag, Josef, D-89257 Illertissen (DE); Hornburg, Gerald, D-89275 Elchingen (DE); Gaulhofer, Andreas, D-88682 Salem (DE)
(74) Vertreter: Kocher, Klaus-Peter

(56) Entgegenhaltungen:
- EP-B- 0 052 265
- WO-A-93/07022
- DE-A- 1 907 737
- US-A- 4 923 768
- IEEE TRANSACTIONS ON POWER APPARATUS AND SYSTEMS, Bd.PAS-88, Nr.2, Februar 1969 Seiten 86 - 93 P. AGARWAL 'The GM High-Performance Induction Motor Drive System'
- PATENT ABSTRACTS OF JAPAN vol. 13, no. 594 (E-867) 27. Dezember 1989 & JP-A-01 248 474 (HITACHI LTD) 4. Oktober 1989
- Broschure "PEM Fuel Cell Power Generator System PGS-107", Ballard Power Systems Inc., 26.02.93
- "Journal of Power Sources", Vol. 37 (1992), Seiten 181-188
- VDI Berichte Nr. 912, 1992, Seiten 125-145
- "Proceedings of the 27th Intersociety Energy Conversion Engineering Conference", Society of Automotive Engineers Inc. 1992, Seiten 3.343-3.348
- "Proceedings of the 27th Intersociety Energy Conversion Engineering Conference", Society of Automative Engineers Inc. 1992, Seiten 3.349-3.355
- "Int. J. Hydrogen Energy", Vol. 16 (1991), Seiten 829-837

## Beschreibung

Die Erfindung betrifft ein Verfahren zur dynamischen Leistungsregelung für ein Fahrzeug mit Brennstoffzelle gemäß dem Oberbegriff des Hauptanspruchs.

Aus einem Artikel von P. Agarwal in IEEE Transactions On Power Apparatus And Systems, 88 (1969) 2, S. 86-93 ist ein Fahrzeug bekannt, das von einem Elektromotor, der mit Hilfe von Brennstoffzellen mit elektrischer Energie versorgt wird, angetrieben wird. Zur Regelung der Leistung des Elektromotors und damit des Fahrzeugs wird vorgeschlagen, die von der Brennstoffzelle gelieferte feste Spannung mit Hilfe eines Spannungswandlers in Abhängigkeit von der Leistungsanforderung zu transformieren. Nachteilig bei diesem System ist der schlechte Wirkungsgrad im Teillastbereich.

Außerdem ist aus der US-PS 4,923,768 ein Brennstoffzellensystem bekannt, bei dem in einer Luftzuführungsleitung ein Kompressor mit veränderlicher Drehzahl und eine Drosselstelle angeordnet sind, wobei über die Drosselstelle der Luftmassenstrom und über die Kompressordrehzahl der Betriebsdruck auf vorgegebene Werte eingestellt wird.

Aus dem VDI-Bericht Nr. 912, 1992, Seiten 125-145 ist es bekannt, die elektrische Antriebseinheit einen Fahrzeugs aus einer Brennstoffzells zu speisen, die mit veränderlichern Oxydant-Massenstrom betrieben wird.

Es ist die Aufgabe der Erfindung, ein Verfahren zu schaffen, mit dem die Leistung eines Fahrzeugs mit Brennstoffzelle dynamisch und unter optimaler Ausnützung der erzeugten elektrischen Energie geregelt werden kann.

Die Aufgabe wird durch die Merkmale des Patentanspruchs 1 gelöst. Weitere Vorteile und Ausgestaltungen gehen aus den Unteransprüchen und der Beschreibung hervor.

Durch die Regelung der Fahrzeugleistung anhand des Oxydant-Massenstroms wird gewährleistet, daß unter allen Betriebsbedingungen die gesamte von der Brennstoffzelle bereitgestellte elektrische Energie der Antriebseinheit zugeführt und somit die eingesetzte Energie optimal genutzt wird. Zu diesem Zweck kann auch vorgesehen werden, daß der vorgegebene Leistungs-Sollwert in Abhängigkeit von Betriebsparametern begrenzt wird. Dadurch kann verhindert werden, daß die Brennstoffzelle mehr elektrische Energie erzeugt, als die Antriebseinheit momentan, beispielsweise wegen Überlastung, aufnehmen kann. Um zu verhindern, daß von der Antriebseinheit mehr elektrische Leistung angefordert wird, als die Brennstoffzelle momentan liefert, muß auf der anderen Seite natürlich auch der vom Fahrer an die Antriebseinheit übermittelte Sollwert korrigiert, beziehungsweise begrenzt werden. Die Anordnung eines Kompressors mit einstellbarer Drehzahl in der Oxydant-Ansaug-Leitung stellt eine einfache Möglichkeit für die Regelung des Oxydant-Massenstroms dar.

Die Erfindung ist nachstehend anhand einer Zeichnung näher beschrieben, wobei
- Fig. 1: eine Prinzipdarstellung eines in einem Fahrzeug angeordneten Brennstoffzellen-Systems und
- Fig. 2: einen Strukturplan eines erfindungsgemäßen Verfahrens zur Leistungsregelung einer in einem Fahrzeug angeordneten Brennstoffzelle zeigt.

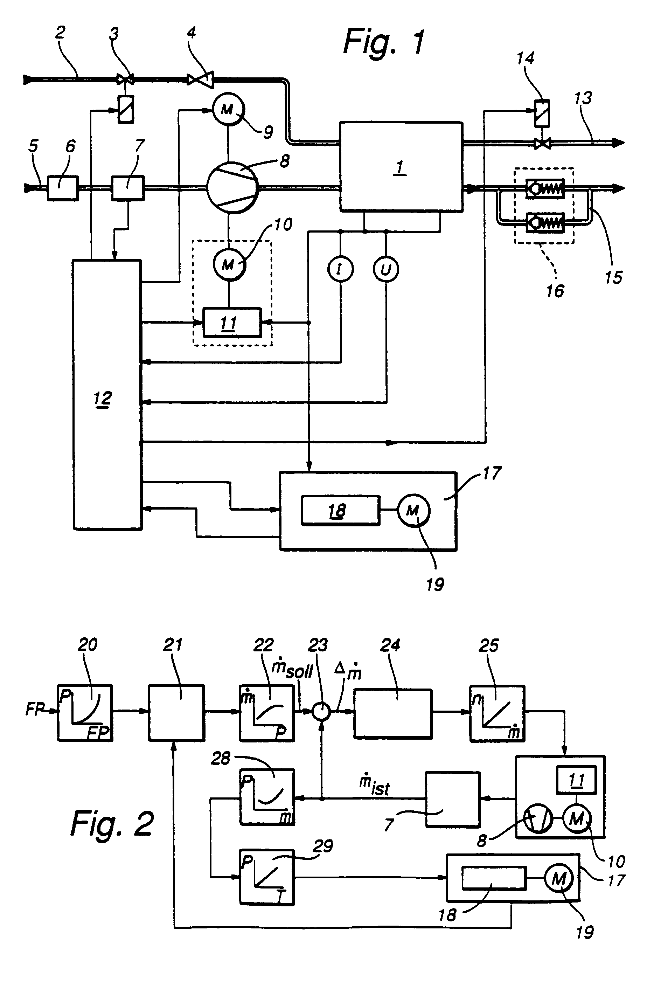

Der in Fig. 1 insgesamt mit 1 bezeichneten Brennstoffzelle wird über eine erste Zuleitung 2, in der ein Ventil 3 und ein Druckregler 4 angeordnet sind, ein Brennmittel, beispielsweise Wasserstoffgas, zugeführt. Über eine zweite Zuleitung 5, in der ein Luftfilter 6, ein Luftmassenmesser 7 und ein Kompressor 8 angeordnet sind, wird der Brennstoffzelle 1 außerdem ein Oxydant, vorzugsweise Sauerstoff oder Umgebungsluft, zugeführt. In der Brennstoffzelle 1 wird der Brennstoff an der Anode oxydiert, das Oxydant wird an der Kathode reduziert. Bei dieser elektrochemischen Reaktion entsteht zwischen den beiden Elektroden eine Spannung. Durch Parallel- beziehungsweise Hintereinanderschaltung vieler solcher Zellen zu einem sogenannten Stack können Spannungen und Stromstärken erreicht werden, die zum Antrieb eines Fahrzeugs ausreichen.

Zum Antrieb des Kompressors 8 ist ein Anlassermotor 9 und ein Elektromotor 10 vorgesehen. Zum Start der Brennstoffzelle 1 wird der Anlassermotor 9 von einer nicht dargestellten 12V-Starter-Batterie mit Strom versorgt. Während des Normalbetriebs wird die zum Betrieb des Elektromotors 10 benötigte elektrische Energie dann von der Brennstoffzelle 1 selbst geliefert. Mit Hilfe eines Stromstellers 11, der von einer Steuereinheit 12 angesteuert wird, kann die Drehzahl n des Elektromotors 10 und somit auch des Kompressors 8 geregelt werden. Über die Drehzahl n des Kompressors 8 kann der Oxydant-Massenstrom *ṁ*_{*ist*} und damit die Leistung p_{BZ} der Brennstoffzelle 1 beeinflußt werden.

Das Abführen der Luft aus der Brennstoffzelle 1 erfolgt über eine erste Abström-Leitung 15. In dieser ersten Abström-Leitung 15 ist ein Druckregelventil 16 angeordnet, mit dessen Hilfe in der Brennstoffzelle 1 ein konstanter Betriebsdruck p aufrechterhalten wird. Um eventuelle Ablagerungen oder Verunreinigungen des Wasserstoffgases aus der Brennstoffzelle 1 entfernen zu können ist eine zweite Abström-Leitung 13, in der ein sogenanntes Purge-Ventil 14 angeordnet ist, vorgesehen. Zum Antrieb des Fahrzeugs ist eine Antriebseinheit 17, bestehend aus einem zweiten Stromsteller 18 und einem Elektromotor 19, vorgesehen.

Die Steuereinheit 12 erhält über elektrische Leitungen Informationen über den momentanen Istwert *ṁ*_{*ist*} des Luftmassenstroms, den Betriebszustand der Antriebseinheit und über die von der Brennstoffzelle 1 erzeugte Spannung U und den entsprechenden Strom I. Diese Informationen werden in der Steuereinheit 12 verarbeitet und daraus Stellsignale für die Stromsteller 11 und 18, die Ventile 3 und 14 und den Anlassermotor 9 erzeugt, die wiederum über entsprechende Leitungen an die einzelnen Komponenten übermittelt werden.

Nachfolgend ist anhand der Fig. 2 ein Verfahren zur dynamischen Leistungsregelung für Brennstoffzellen in Fahrzeugen beschrieben. Hierbei wird aus der Fahrpedalstellung FP, über die der Fahrer seinen Leistungswunsch anfordern kann, zum einen die Leistung der Brennstoffzelle 1 über eine Regelung des Luftmassenstroms *ṁ*_{*ist*} gesteuert und zum anderen die maximale elektrische Leistung pₘₐₓ, die der Brennstoffzelle 1 für die Antriebseinheit 17 entzogen werden kann, berechnet. Die Leistung pₘₐₓ ergibt sich dabei aus der Differenz zwischen der von der Brennstoffzelle 1 momentan erzeugten Leistung p_{BZ} und der für die Zusatzaggregate benötigten Leistung p_{ZA}.

In Block 20 wird aus der Fahrpedalstellung FP über ein Kennfeld die vom Fahrer angeforderte Leistung Pₛₒₗₗ ermittelt. Um zu verhindern, daß die Brennstoffzelle 1 mehr elektrische Leistung p_{BZ} produziert, als die Antriebseinheit 17 momentan aufnehmen kann, wird in Block 21 bei Vorliegen entsprechender Fehlermeldungen der Antriebseinheit 17 der Leistungs-Sollwert pₛₒₗₗ begrenzt. Anschließend wird in Block 22 anhand eines weiteren Kennfeldes aus dem Leistungs-Sollwert pₛₒₗₗ ein Sollwert für den benötigten Luftmassenstrom *ṁ*_{*soll*} ermittelt. In der vergleichsstelle 23 wird dann der Sollwert für den Luftmassenstrom *ṁ*_{*soll*} mit dem zugehörigen Istwert *ṁ*_{*ist*}, der mit Hilfe eines Hitzdraht-Luftmassenmessers 7 gemessen wird, verglichen. Das Vergleichsergebnis wird einem PI-Regler 24 zugeführt, mit dessen Hilfe die Differenz Δ*ṁ* zwischen dem Sollwert *ṁ*_{*soll*} und dem Istwert *ṁ*_{*ist*} für den Luftmassenstrom auf Null geregelt wird. Aus dem neuen Wert für den Luftmassenstrom wird dann in Block 25 anhand einer weiteren Kennlinie die Drehzahl n ermittelt, bei der der Kompressor 8 den entsprechenden Luftmassenstrom liefert. Diese Drehzahl n wird dann anschließend mittels eines Leistungsstellers 11 am Kompressor 8 eingestellt.

Um zu verhindern, daß die Antriebseinheit 17 mehr Leistung von der Brennstoffzelle 1 anfordert, als diese momentan liefern kann, wird der Antriebseinheit 17 nicht die im Block 20 aus der Fahrpedalstellung FP ermittelte Leistungsanforderung pₛₒₗₗ zugeführt, sondern ein Antriebs-Leistungs-Sollwert pₖₒᵣᵣ. Dieser Antriebs-Leistungs-Sollwert pₖₒᵣᵣ wird in den Blöcken 28 und 29 ermittelt. Und zwar wird in Block 28 aus dem tatsächlich gemessenen Luftmassenstrom *ṁ*_{*ist*} anhand einer Kennlinie die tatsächliche Leistung pₘₐₓ, die die Brennstoffzelle 1 bei diesem Luftmassenstrom *ṁ*_{*ist*} abgeben kann, ermittelt. Dabei wird das Kennfeld so gewählt, daß die tatsächliche Leistung pₘₐₓ soweit unter der maximalen Leistung der Brennstoffzelle p_{BZ} liegt, daß ein Zusammenbrechen der Brennstoffzelle 1 sicher verhindert werden kann. Entsprechend wird in Block 29 mit Hilfe eines Kennfeldes aus der Temperatur T der Brennstoffzelle 1 die tatsächlich lieferbare elektrische Leistung p_{T} ermittelt. Die in den Blöcken 28 und 29 ermittelten tatsächlich lieferbaren Leistungen pₘₐₓ und p_{T} werden miteinander verglichen und der niedrigere Wert der Antriebseinheit 17 als Antriebs-Leistungs-Sollwert pₖₒᵣᵣ zugeführt.

Das Verfahren arbeitet prinzipiell also so, daß in der Brennstoffzelle 1 immer gerade die zum Bereitstellen der vom Fahrer angeforderten Fahrleistung pₛₒₗₗ erforderliche elektrische Leistung erzeugt wird. Die Leistung p_{BZ} der Brennstoffzelle 1 wird hierbei durch eine Regelung der Kompressor-Drehzahl n und damit des Luftmassenstroms *ṁ*_{*ist*} erreicht. Zusätzlich sind aber noch zwei Sicherungen in das Verfahren eingebaut. Zum einen wird durch eine Begrenzung der angeforderten Leistung pₛₒₗₗ in Block 21 verhindert, daß die Brennstoffzelle 1 mehr elektrische Leistung erzeugt, als die Antriebseinheit 17 momentan aufnehmen kann. Beispielsweise sendet die Antriebseinheit 17 bei Überhitzung, bei Überdrehzahlen oder beim Auftreten von anderen Funktionsstörungen entsprechende Fehlersignale an den Block 21.

Zum anderen verhindert die Korrektur der angeforderten Leistung in Block 28 und 29, daß die Antriebseinheit 17 mehr Leistung aufnimmt, als die Brennstoffzelle 1 momentan liefern kann. Um ein Zusammenbrechen der Brennstoffzelle 1 zu verhindern wird der Antriebseinheit 17 also gegebenenfalls eine reduzierte Leistungsanforderung pₖₒᵣᵣ vorgetäuscht. Dieser Fall tritt vor allem bei einem schlagartigen Niederdrücken des Fahrpedals auf. Die Brennstoffzelle 1 kann in diesem Fall nicht sofort soviel elektrische Leistung liefern, wie die Antriebseinheit 17 zum Bereitstellen der angeforderten Fahrleistung pₛₒₗₗ benötigen würde. In der verbleibenden Zeit, bis die Brennstoffzelle 1 die geforderte Leistung pₛₒₗₗ liefern kann, wird der Antriebseinheit 17 ein Fahrerwunsch pₖₒᵣᵣ vorgetäuscht, der der momentan maximal lieferbaren Leistung pₘₐₓ entspricht. Die Antriebseinheit 17 wird dadurch immer entlang der maximal lieferbaren elektrischen Leistung pₘₐₓ an die tatsächlich vom Fahrer gewünschte Leistung pₛₒₗₗ herangeführt.

## Patentansprüche

1. Verfahren zur dynamischen Regelung der Leistung einer elektrischen Antriebseinheit (17) eines Fahrzeugs, die von einer im Fahrzeug angeordneten Brennstoffzelle (1) mit elektrischer Energie versorgt wird,
dadurch gekennzeichnet,
daß die von der Brennstoffzelle (1) erzeugte Leistung (p_{BZ}) durch Regelung des Oxydant-Massenstroms (*ṁ*_{*ist*}) eingestellt wird und daß der elektrischen Antriebseinheit (17) jeweils die maximal von der Brennstoffzelle (1) zur Verfügung gestellte elektrische Leistung (pₘₐₓ) zugeführt wird, indem der Antriebseinheit (17) ein Antriebs-Leistungs-Sollwert (p_{KORR}) bereitgestellt wird, der aus dem Istwert (*ṁ*_{*ist*}) des Oxydant-Massenstroms ermittelt wird.

2. Verfahren nach Anspruch 1;
**dadurch gekennzeichnet,**
daß aus der Fahrpedalstellung (FP) ein Leistungs-Sollwert (pₛₒₗₗ) ermittelt wird, daß der Oxydant-Massenstrom (*ṁ*_{*soll*}), den die Brennstoffzelle (1) zur Erzeugung des Leistungs-Sollwertes (pₛₒₗₗ) benötigt, ermittelt und einer Vergleichsstelle (23) eines Regelkreises als Sollwert zugeführt wird, daß der momentan strömende Oxydant-Massenstrom (*ṁ*_{*ist*}) ermittelt und der Vergleichsstelle (23) des Regelkreises als Istwert zugeführt wird, und daß die Vergleichsstelle (23) aus der Differenz zwischen dem Massenstrom-Sollwert (*ṁ*_{*soll*}) und dem Massenstrom-Istwert (*ṁ*_{*ist*}) einen Differenzmassenstrom (Δ*ṁ*) bestimmt, der auf Null regelt wird.

3. Verfahren nach Anspruch 2,
**dadurch gekennzeichnet,**
daß der Oxydant-Massenstrom (*ṁ*_{*ist*}) durch Steuerung der Drehzahl (n) eines in der zweiten Zuleitung (5) angeordneten Kompressors (8) geregelt wird.

4. Verfahren nach Anspruch 1,
**dadurch gekennzeichnet,**
daß der Brennstoffzelle (1) über die zweite Zuleitung (5) Umgebungsluft als Oxydant bereitgestellt wird.

5. Verfahren nach Anspruch 1,
**dadurch gekennzeichnet,**
daß der aus der Fahrpedalstellung (FP) ermittelte Leistungs-Sollwert (pₛₒₗₗ) in Abhängigkeit von Betriebsparametern begrenzt wird.

6. Verfahren nach Anspruch 1,
**dadurch gekennzeichnet,**
daß der Antriebs-Leistungs-Sollwert (pₖₒᵣᵣ) in Abhängigkeit von Betriebsparametern ermittelt wird.

## Claims

1. Method for the dynamic control of the power of an electric drive unit (17) of a vehicle which is supplied with electrical energy by a fuel cell (1) arranged in the vehicle, characterized in that the power (p_{BZ}) produced by the fuel cell (1) is set by controlling the rate of oxidant flow (*ṁ*_{act}) and in that in each case the maximum electrical power (pₘₐₓ) made available by the fuel cell (1) is fed to the electrical drive unit (17), in that a set value (p_{corr}) for the drive power is supplied to the drive unit (17), which set value is determined from the actual value (*ṁ*_{act}) of the rate of oxidant flow.

2. Method according to Claim 1, characterized in that a set value (pₛₑₜ) for the power is determined from the accelerator pedal position (FP), in that the rate of oxidant flow (*ṁ*ₛₑₜ) which the fuel cell (1) requires to produce the set value (pₛₑₜ) for the power is determined and fed to a comparison point (23) of a control circuit as set value, in that the instantaneously flowing rate of oxidant flow (*ṁ*_{act}) is determined and is fed to the comparison point (23) of the control circuit as actual value, and in that the comparison point (23) determines a difference rate of air flow (Δ*ṁ*), which is controlled to 0, from the difference between the set value (*ṁ*ₛₑₜ) for the rate of air flow and the actual value (*ṁ*_{act}) for the rate of air flow.

3. Method according to Claim 2, characterized in that the rate of oxidant flow (*ṁ*_{act}) is controlled by controlling the speed of revolution (n) of a compressor (8) arranged in the second feed line (5).

4. Method according to Claim 1, characterized in that ambient air is supplied to the fuel cell (1) as oxidant via the second feed line (5).

5. Method according to Claim 1, characterized in that the set value (pₛₑₜ) for the power which is determined from the accelerator pedal position (FP) is limited as a function of operating parameters.

6. Method according to Claim 1, characterized in that the set value (p_{corr}) for the drive power is determined as a function of operating parameters.

## Revendications

1. Procédé de régulation dynamique de la puissance d'un groupe d'entraînement électrique (17) d'un véhicule, alimenté en énergie électrique par une pile à combustible (1) disposée dans le véhicule,
caractérisé en ce que
la puissance (p_{BZ}) générée par la pile à combustible (1) est réglée par réglage du débit masse d'oxydant (*ṁ*_{réel}) et en ce que la puissance électrique (Pₘₐₓ) maximale mise à disposition par la pile à combustible (1) est chaque fois amenée au groupe d'entraînement électrique (17), en ce qu'une valeur de consigne de puissance d'entraînement (P_{corr}), déterminée à partir de la valeur réelle (*ṁ*_{réel}) du débit masse d'oxydant, est fournie au groupe d'entraînement (17).

2. Procédé selon la revendication 1, caractérisé en ce qu'une valeur de consigne de puissance (P_{cons}) est déterminée à partir de la position de pédale d'accélérateur (FP), en ce que le débit masse d'oxydant (*ṁ*_{cons}), que demande la pile à combustible (1) pour générer la valeur de consigne de puissance (P_{cons}), est déterminée et amenée à un point de comparaison (23) d'un circuit de régulation, à titre de valeur de consigne, en ce que le débit masse d'oxydant (*ṁ*_{réel}) s'écoulant momentanément est déterminé et amené, à titre de valeur réelle, au point de comparaison (23) du circuit de régulation, et en ce que le point de comparaison (23) détermine, à partir de la différence entre la valeur de consigne de débit masse (*ṁ*_{cons}) et la valeur réelle de débit masse (*m*_{réel}) un débit masse différentiel (Δ*ṁ*), qui est réglé à la valeur zéro.

3. Procédé selon la revendication 2, caractérisé en ce que le débit masse d'oxydant (*ṁ*_{réel}) est régulé par commande de la vitesse de rotation (n) d'un compresseur (8) disposé dans la deuxième conduite d'amenée (5).

4. Procédé selon la revendication 1, caractérisé en ce que de l'air ambiant est fourni à titre d'oxydant à la pile à combustible (1), par l'intermédiaire de la deuxième conduite d'amenée (5).

5. Procédé selon la revendication 1, caractérisé en ce que la valeur de consigne de puissance (p_{cons}), déterminée à partir de la position de la pédale d'accélérateur (FP), est limitée en fonction de paramètres de fonctionnement.

6. Procédé selon la revendication 1, caractérisé en ce que la valeur de consigne de puissance d'entraînement (P_{corr}) est déterminée en fonction de paramètres de fonctionnement.
